# EUROPÄISCHE PATENTSCHRIFT

(11) **EP 3 069 864 B1**
(45) Veröffentlichungstag und Bekanntmachung des Hinweises auf die Patenterteilung: **10.07.2019**
(21) Anmeldenummer: 15198564.5
(22) Anmeldetag: 09.12.2015
(51) Int. Cl.: B29D 30/72, B29D 30/06, B60C 13/00, B60C 13/02, B29C 33/10, B29C 33/42

(54) **FAHRZEUGLUFTREIFEN UND VULKANISATIONSFORM ZUR VULKANISATION EINES FAHRZEUGLUFTREIFENS**
PNEUMATIC VEHICLE TYRE AND VULCANIZATION MOULD FOR VULCANIZATION OF A PNEUMATIC VEHICLE TYRE
PNEUMATIQUE DE VEHICULE ET MOULE DE VULCANISATION POUR UN PNEUMATIQUE DE VEHICULE

(30) Priorität: 19.03.2015 DE 102015205007
(43) Veröffentlichungstag der Anmeldung: 21.09.2016
(73) Patentinhaber: Continental Reifen Deutschland GmbH, 30165 Hannover (DE)
(72) Erfinder: Rittweger, Stefan, 30163 Hannover (DE)
(74) Vertreter: Finger, Karsten

(56) Entgegenhaltungen:
- EP-A1- 0 522 781
- EP-A1- 2 020 311
- EP-A1- 2 594 418
- EP-A2- 0 253 557
- DE-A1-102009 043 929
- DE-A1-102009 059 253
- DE-U1- 7 834 612
- US-A1- 2014 096 883

## Beschreibung

Die Erfindung betrifft einen in einer Vulkanisationsform vulkanisierten Fahrzeugluftreifen in Radialbauart. Die Erfindung betrifft ferner eine Vulkanisationsform zur Vulkanisation eines Fahrzeugluftreifens mit Seitenschalen zur Ausformung der Seitenwände des Fahrzeugluftreifens.

Es ist üblich, an den außerhalb der vorgeschriebenen Beschriftungen befindlichen freien Flächen der Seitenwände eines Fahrzeugluftreifens gestalterische Elemente, insbesondere Dekorelemente mit Schraffuren, auszubilden. So ist beispielsweise aus der DE 41 113 45 A1 ein Fahrzeugreifen bekannt, bei dem die Erhebungen, welche Schraffurflächen bilden, in radialer Richtung fächerartig zusammenlaufend angeordnet sind. Die Erhebungen, die üblicherweise Schraffurflächen an den Seitenwänden bilden, werden bei PKW-Reifen meist in einer Höhe von 0,3 mm und bei LKW-Reifen meist in einer Höhe von 0,3 mm für Schraffuren und in einer Höhe von 0,6 mm für Erhebungen an glattflächigen Bereichen ausgeführt, um die Tire-Uniformity zu erhalten.

Ein Fahrzeugluftreifen der eingangs genannten Art ist beispielsweise aus der EP 0 253 557 A2 bekannt. Diese Schrift betrifft die Ausbildung von mit Schraffurfeldern versehenen Buchstaben und Ziffern an der Seitenwand eines Reifens, wobei die Buchstaben bzw. Ziffern selbst als glatte Flächen ausgebildet sind und die schraffierten Flächen eine dreidimensionale Gestaltung der Buchstaben bzw. Ziffern simulieren.

Die EP 0 522 781 A1 offenbart ein Designelement an der Seitenwand eines Fahrzeugluftreifens, welches beispielsweise als Buchstabe ausgeführt ist und einen Vertiefungsabschnitt und einen Umrissabschnitt aufweist, welcher von der Seitenwandoberfläche vorsteht. Der Umrissabschnitt ist insbesondere mit einer glatten Oberfläche versehen, der Boden des Vertiefungsabschnittes mit einer rauen Oberfläche.

Auch die EP 2 020 311 A1 befasst sich mit der Ausbildung von Erhebungen in der Seitenwand von Reifen, die als Buchstaben oder Zahlen ausgestaltet sind. Erwähnt ist, dass am Boden der Vertiefungen in den Seitenwandschalen der Vulkanisationsform, die die Erhebungen ausbilden, Entlüftungsbohrungen vorgesehen sein können, um die Entlüftung der Vulkanisationsform in diesem Bereich zu unterstützen.

Aus der DE 10 2009 059 253 A1 ist eine Vulkanisierform mit einer Seitenwandschale bekannt, auf welcher eine Folie platzierbar ist, die insbesondere sandwichartig aufgebaut ist und mit Bezeichnungen versehen ist. Die Folie weist eine Gummischicht auf, die sich bei der Vulkanisation des Reifens mit diesem verbindet. Federnd gelagerte Stifte, die Teile von Entlüftungsventilen sind, dienen als Haltemittel der Folie an der Seitenwandschale.

Bei der Vulkanisation von Fahrzeugluftreifen in einer Vulkanisationsform ist es erforderlich, für ein Abführen der zwischen dem Reifenrohling und der Vulkanisationsform beim Einformen vorhandenen Luft zu sorgen, um Fehlstellen im fertig vulkanisierten Reifen zu vermeiden. Es ist daher üblich, Vulkanisationsformen zu entlüften, indem eine Vielzahl von Entlüftungsbohrungen in den einzelnen Vulkanisationsformteilen ausgebildet wird, welche ein Abführen der eingeschlossenen Luft gewährleisten. In Entlüftungsbohrungen werden meist Entlüftungseinheiten mit Ventilen eingesetzt, die bei eingeformtem Reifenrohling die Entlüftungsbohrungen verschließen und daher das Entstehen von Gummiaustrieben während der Vulkanisation des Rohreifens verhindern. An einigen Stellen der Vulkanisationsform liegen erschwerte Entlüftungsbedingungen vor, die mit der Reifenkonstruktion zusammenhängen. Speziell bei den Überlappungsbereichen der Karkasslagen in den Seitenwänden, die unflexible Bereiche darstellen, ist nur eine schlechte Entlüftung möglich. Dadurch entstehen an diesen Stellen an der Reifenseitenwand außen häufig Fehlstellen. Um solche Fehlstellen zu verhindern, werden beispielsweise in diesen Bereichen in den Seitenschalen gitterartig verlaufende Vertiefungen ausgebildet, an deren Kreuzungspunkten Entlüftungsbohrungen mit Entlüftungsventilen positioniert sind. Der fertig vulkanisierte Reifen wirkt an diesen Stellen der Seitenwandbereiche aufgrund der bei der Vulkanisation ausgebildeten gitterartig verlaufenden Erhebungen wie repariert und somit minderwertig, was bei Kunden ein gewisses Misstrauen erweckt.

Der Erfindung liegt die Aufgabe zu Grunde, an den Überlappungsbereichen der Karkasslagen in den Seitenwänden eine optimale Entlüftung sicherzustellen, wobei sich die betreffenden Maßnahmen optisch einwandfrei und unauffällig in ein vorhandenes Seitenwanddekor integrieren lassen sollen.

Gelöst wird die gestellte Aufgabe erfindungsgemäß durch einen Fahrzeugluftreifen nach Anspruch 1, bei dem zumindest ein Schraffurfeld auf jeder Seitenwand nahe des Wulstbereiches und beim Überlappungsbereich der Gewebelage(n) ausgebildet ist, welches zwei im Wesentlichen in radialer Richtung verlaufende Seitenränder und einen beim Wulstbereich verlaufenden Rand, eine radiale Erstreckung von mindestens 3 cm sowie in Umfangsrichtung der Seitenwand eine Erstreckung von mindestens 3 cm und insbesondere von bis zu 7 cm aufweist, wobei zumindest ein Seitenrand und der beim Wulstbereich verlaufende Rand vom Rahmen bzw. von Rahmenteilen begrenzt sind, welche zumindest bereichsweise eine Breite von mindestens 4 mm aufweisen, wobei der Rahmen von einer Vertiefung in der Vulkanisationsform ausgebildet wird, in welcher Entlüftungsbohrungen mit Entlüftungseinsätzen positioniert sind.

Die Erfindung wird ferner durch eine Vulkanisationsform nach Anspruch 6 gelöst, bei welcher in jenem Bereich jeder Seitenschale, der an den Wulstbereich anschließt und in welchem der Reifen mit dem Überlappungsbereich der Karkasslage(n) positioniert wird, zumindest ein Flächenelement mit zumindest im Wesentlichen parallel zueinander verlaufenden Vertiefungen mit einer Tiefe von 0,2 mm bis 0,6 mm ausgebildet ist, welches Flächenelement zwei im Wesentlichen in radialer Richtung verlaufende Seitenränder und einen beim Wulstbereich verlaufenden Rand, eine radiale Erstreckung von mindestens 3 cm sowie in Umfangsrichtung der Seitenschale eine Erstreckung von mindestens 3 cm und insbesondere von bis zu 7 cm aufweist und zumindest zum Teil von einer Vertiefung begrenzt ist, die zumindest einen Seitenrand und den beim Wulstbereich verlaufende Rand begrenzt ist, bereichsweise mindestens 4 mm breit ist und deren Tiefe zumindest der Tiefe der Vertiefungen im Flächenelement entspricht, wobei in dieser Vertiefung Entlüftungsbohrungen mit Entlüftungseinsätzen vorgesehen sind.

Gemäß der Erfindung bildet ein Designelement - ein Schraffurfeld mit einem Rahmen - bei der Vulkanisation des Reifens einen Entlüftungsbereich im kritischen Überlappungsbereich der Karkasslage(n). Die durch Erhebungen gebildete Schraffur wird ja von Vertiefungen in der Vulkanisationsform ausgebildet, die für ein Ableiten von Luft in den diese Vertiefungen zumindest teilweise umgebenden tieferen Vertiefung sorgen. In der den Rahmen bildenden Vertiefung sind vorteilhafterweise einige mit Entlüftungseinsätzen versehene Entlüftungsbohrungen angeordnet. Am fertig vulkanisierten Reifen ist auf der Seitenwand ein Designelement vorhanden, welches sich gestalterisch in die vorgesehene sonstige Designausgestaltung der Seitenwand gut integrieren lässt.

Bei der bevorzugten Ausführungsform der Erfindung ist die Höhe des Rahmens um mindestens 0,2 mm größer als die Höhe der Erhebungen. Diese Maßnahme unterstützt ein Ableiten von Luft in die Lüftungsbohrungen, die am Boden der den Rahmen ausbildenden Vertiefung in der Vulkanisationsform ausgebildet sind.

Durch eine Gliederung des Schraffurfeldes in Schraffurfeldelemente kann ebenfalls die Entlüftung gezielt unterstützt werden. So kann das Schraffurfeld beispielsweise mehrere Schraffurfeldelemente aufweisen, wobei die Erhebungen in jedem Schraffurfeldelement abweichend zu den Erhebungen in den anderen Schraffurfeldelemente verlaufen.

Schraffurfeldelemente aufweisen, wobei die Erhebungen in jedem Schraffurfeldelement abweichend zu den Erhebungen in den anderen Schraffurfeldelemente verlaufen.

Bei einer bevorzugten Ausführungsform der Erfindung beträgt ferner die Breite des Rahmens zumindest bereichsweise bis zu 6 mm, wobei bei einer besonders bevorzugten Ausführung der Rahmen eine im Wesentlichen konstante Breite aufweist.

Erfindungsgemäß weist das Schraffurfeld eine radiale Erstreckung von mindestens 3 cm und in Umfangsrichtung der Seitenwand eine Erstreckung von mindestens 3 cm, insbesondere von bis zu 7 cm, auf. Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Ausschnitt einer Seitenwand eines Fahrzeugluftreifens in Draufsicht mit einer Ausführungsform der Erfindung,
Fig. 2 einen Ausschnitt einer Seitenwand eines Fahrzeugluftreifens in Draufsicht mit einer weiteren Ausführungsform der Erfindung,
Fig. 3 einen Schnitt entlang der Linie III-III der Fig. 1 und
Fig. 4 eine Schnittdarstellung durch jenen Teilbereich einer Seitenschale einer Vulkanisationsform, welcher den in Fig. 3 im Schnitt gezeigten Teilbereich der Seitenwand ausformt.

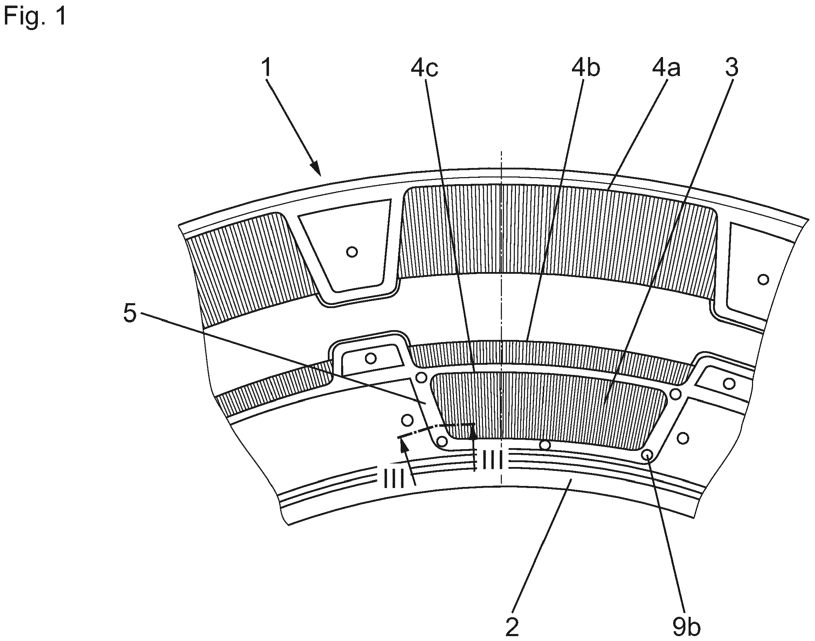

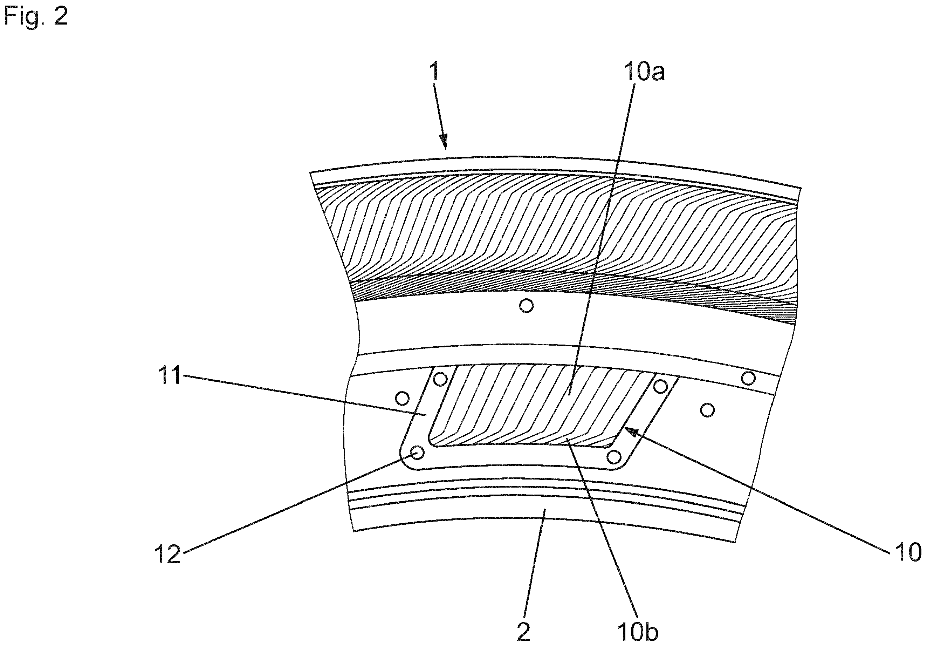

Fig. 1 und Fig. 2 zeigen schematisch Abschnitte einer Seitenansicht eines Fahrzeugluftreifens mit einem Ausschnitt einer Seitenwand 1 und einem Wulstbereich 2, welcher bei auf einer Felge montiertem Reifen durch die Felge zumindest teilweise abgedeckt ist.

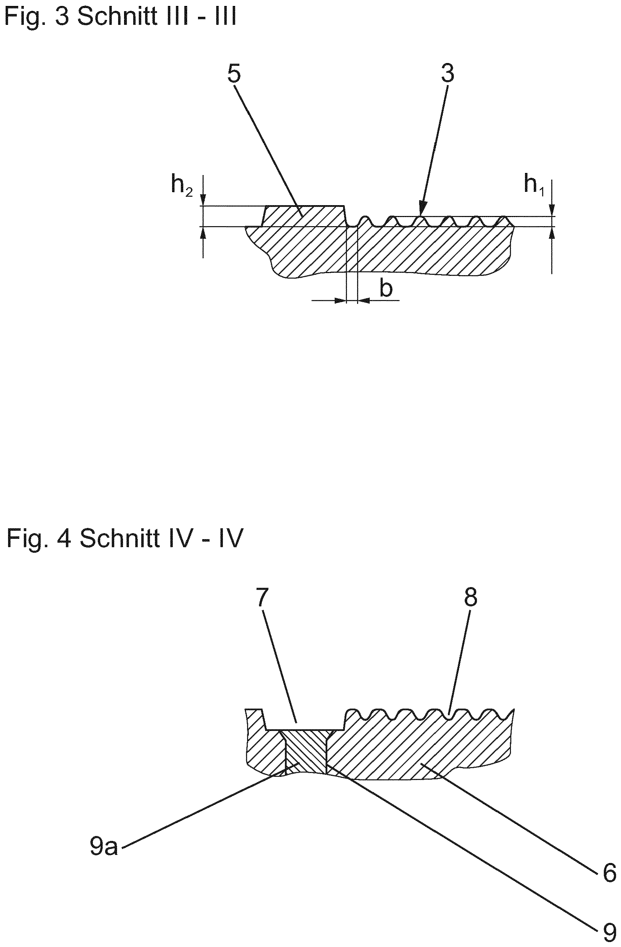

Auf der Seitenwand 1 eines Fahrzeugluftreifens sind üblicherweise die vorgeschriebenen Angaben, wie Dimension, Speed-Index, der Hersteller, der Brandname, der Verwendungszweck und dergleichen angegeben. Diese Angaben befinden sich meist auf glatten und leicht erhabenen Flächenbereichen im Gummimaterial der Seitenwand 1. Außerhalb dieser Flächenbereiche verbleibt einiges an Freifläche auf den Seitenwänden von Fahrzeugluftreifen, um Dekorelemente, die üblicherweise großteils aus Schraffuren gebildet sind, unterzubringen. Als "Schraffur" werden Dekors an der Seitenwand von Fahrzeugluftreifen bezeichnet, die sich jeweils aus einer Vielzahl von gering voneinander beabstandeten, im Querschnitt im Wesentlichen dreieckförmigen Erhebungen zusammensetzen, die nebeneinander und insbesondere parallel bzw. im Wesentlichen parallel zueinander verlaufen. Fig. 3 zeigt ein Ausführungsbeispiel einer solchen Schraffur im Querschnitt mit Erhebungen 3 einer Höhe h₁ von etwa 0,3 mm und einem gegenseitigen Abstand a an der Basis von 0,2 mm. Die Höhe h₁ der Erhebungen 3 beträgt üblicherweise von 0,2 mm bis 0,6 mm. Innerhalb eines Schraffurfeldes weisen sämtliche Erhebungen 3 vorzugsweise übereinstimmende Höhen auf.

Bei dem in Fig. 1 gezeigten Ausschnitt sind mehrere Schraffurfelder 4a, 4b, 4c vorgesehen, wobei bei diesem Ausführungsbeispiel die Erhebungen 3 in sämtlichen Schraffurfeldern 4a, 4b, 4c in radialer Richtung verlaufen und das Schraffurfeld 4c unmittelbar an den Wulstbereich 2 anschließt. Der gezeigte Ausschnitt befindet sich an jener Stelle der Seitenwand 1, wo konstruktions- und aufbaubedingt die Gewebelage(n) der Karkasse überlappt bzw. überlappen. Speziell in Fahrzeugluftreifen für Vans oder Lighttrucks sind meist zwei Karkasslagen vorgesehen, sodass die Überlappungsbereiche wenig flexibel sind sich bei der Vulkanisation des Fahrzeugluftreifens in einer Vulkanisationsform nur schwer entlüften lassen, vor allem an den tiefsten Stellen der Vulkanisationsform nahe der Wulstbereiche 2. Im unteren Bereich der Seitenwand 1, nahe des Reifenwulstes, welcher meist glatt oder mit einer nur kleinen Beschriftung versehen ist, treten daher leicht Fehlstellen durch mangelnde Entlüftung auf.

Mit einem speziell ausgeführten Dekorbereich an jenen Bereichen der Seitenwände 1, innerhalb welchen jeweils der Überlappungsbereich der Karkasslage(n) verläuft, lässt sich eine optimale Entlüftung erzielen und eine optisch einwandfreie Seitenwand erstellen. Bei der Ausführungsform gemäß Fig. 1 ist in diesem kritischen Bereich das Schraffurfeld 4c, welches beim gezeigten Ausführungsbeispiel in Draufsicht im Wesentlichen die Form eines gleichschenkeligen Trapezes aufweist, ausgebildet. Das Schraffurfeld 4c ist zumindest an seinen beiden in radialer Richtung verlaufenden Rändern und seinem dem Reifenwulst benachbart verlaufenden Rand von einem mindestens 4 mm breiten Rahmen 5 umlaufen. Der Rahmen 5 ist im Querschnitt eine im Wesentlichen rechteckige, über seine Breite in konstanter Höhe h₂ ausgeführte Erhebung, wobei die Höhe h₂ zumindest der Höhe h₁ der Erhebungen 3 entspricht und insbesondere um mindestens 0,2 mm größer ist als die Höhe h₁ der Erhebungen 3 im Schraffurfeld 4c. Insbesondere kann die Höhe h₂ des Rahmens 5 um bis zu 0,4 mm größer sein als die Höhe h₁ der Erhebungen 3, beispielsweise beträgt die Höhe h₂ 0,6 mm. Die Breite des Rahmens 5 an seiner oberen Außenfläche beträgt insbesondere bis zu 6 mm. Die Breite des Rahmens 5 ist vorzugsweise konstant, kann jedoch auch variieren, wobei der Rahmen 5 zumindest Bereiche aufweist, in welchen seine Breite mindestens 4mm beträgt.

Wie es in Fig. 4 gezeigt ist, wird der Rahmen 5 in der Seitenschale 6 der Vulkanisationsform ausgebildet und ist hier eine entsprechende Vertiefung 7 in der Seitenschale 6. Die Erhebungen 3 im Schraffurfeld 4c werden ebenfalls von Vertiefungen 8 ausgebildet, die jedoch eine geringere Tiefe aufweisen als die Vertiefung 7. In der den Rahmen 5 ausbildenden Vertiefung 7 der Seitenschale 6 sind einige Entlüftungsbohrungen 9 ausgebildet, von welchen in Fig. 4 eine angedeutet ist. In die Entlüftungsbohrungen 9 sind Entlüftungseinheiten 9a (Eurovents) eingesetzt, die Entlüftungsventile enthalten. Die den Rahmen 5 ausbildende Vertiefung 7 weist zumindest in jenen Bereichen, wo die Entlüftungsbohrungen 9 ausgebildet sind, an ihrem Boden eine Breite von mindestens 4 mm auf. Die Entlüftungseinheiten 9a gewährleisten gemeinsam mit den Vertiefungen 8 und der Vertiefung 7 ein gutes Abführen der beim Einformen des Reifenrohlings zwischen diesem und der Reifenform vorhandenen Luft nach außen. Die in die Entlüftungsbohrungen 9 eingesetzten Entlüftungseinheiten 9a weisen den Vorteil auf, dass sie beim Einformen des Reifenrohlings die Bohrungen 9 offen halten und die erforderliche Entlüftung sicherstellen, bei eingeformtem Rohling jedoch die Bohrungen 9 verschließen. Bei der Vulkanisation des Reifens entstehen daher keine Gummiaustriebe im Bereich der Entlüftungsbohrungen 9.

Die Entlüftungseinheiten 9a hinterlassen im vulkanisierten Reifen auf dem Rahmen 5 kaum sichtbare, leicht erhabene Ringe 9b.

Bei der in Fig. 2 gezeigten Ausführungsform ist an der Seitenwand 1 beim Überlappungsbereich der Karkasslage(n) und unmittelbar an den Reifenwulst 2 anschließend ein in Draufsicht im Wesentlichen parallelogrammförmiges Schraffurfeld 10 ausgebildet, welches zwei Schraffurflächenelemente 10a, 10b aufweist, wobei die Erhebungen 3 in jedem Schraffurflächenelement 10a, 10b unter einem anderen Winkel zur radialen Richtung verlaufen und unterschiedliche Abstände aufweisen. Analog zu Fig. 1 ist das Schraffurfeld 10 von einem zumindest bereichsweise mindestens 4 mm breiten Rahmen 11 U-förmig umlaufen, und zwar an seinen seitlichen Rändern und seinem dem Reifenwulst benachbarten Rand. Bezüglich der Abmessungen bzw. Dimensionierung des Rahmens 11 und der Erhebungen 3 im Schraffurfeld 10 gelten die bei der ersten Ausführungsform erwähnten Angaben und Abmessungen. Bei dieser Ausführungsform erfolgt beispielsweise die Entlüftung durch Entlüftungseinsätze in der den Rahmen 11 ausbildenden Vertiefung der Seitenschale der Vulkanisationsform an den zwei Eckbereichen der Vertiefung und an den dem Wulstbereich 2 abgewandten Enden der Vertiefung. Die Entlüftungseinheiten hinterlassen im vulkanisierten Reifen auf dem Rahmen 11 kaum sichtbare, leicht erhabene Ringe 12.

Bei weiteren, nicht dargestellten Ausführungsformen kann das zumindest zum Teil von einem Rahmen begrenzte Schraffurfeld ein Teilbereich eines im oberen Seitenwandbereich ausgebildeten Schraffurbereiches sein. Darüber hinaus sind Ausführungsvarianten der Erfindung denkbar, bei welchen sich das erfindungsgemäße Schraffurfeld aus beliebig verlaufenden Erhebungen zusammensetzt, wobei der Verlauf der Erhebungen derart gewählt ist, dass sie in den vorgesehenen Schraffurfeldelementen jeweils parallel zueinander verlaufen. Die Vertiefungen in der Seitenschale, welche die Erhebungen ausbilden, und die gegenüber diesen tiefer ausgeführten Vertiefungen, die den Rahmen bilden und in welchen die Entlüftungsbohrungen mit Entlüftungseinheiten positioniert sind, werden bezüglich ihres Verlaufes derart aufeinander abgestimmt sind, dass die zwischen dem Rohreifen und der Vulkanisationsform beim Einformen des Reifens vorhandene Luft besonders gut in die Entlüftungseinheiten abgeleitet werden kann.

Das erfindungsgemäße Schraffurfeld wird in jeder Seitenwand vorzugsweise nur an der einen Stelle - beim Überlappungsbereich der Karkasslage(n) - ausgebildet. Das Schraffurfeld erstreckt sich in Umfangsrichtung des Reifens zumindest über 3 cm, insbesondere über bis zu 7cm, in radialer Richtung über zumindest 3 cm.

### Bezugsziffernliste

- 1: Seitenwand
- 2: Wulstbereich
- 3: Erhebung
- 4a, 4b, 4c: Schraffurfeld
- 5: Rahmen
- 6: Seitenschale
- 7, 8: Vertiefung
- 9: Entlüftungsbohrung
- 9a: Entlüftungseinheit
- 9b, 12: ringförmige Erhebung
- 10: Schraffurfeld
- 10a, 10b: Schraffurfeldelement
- 11: Rahmen
- a: Abstand
- h₁, h₂: Höhe

## Patentansprüche

1. In einer Vulkanisationsform vulkanisierter Fahrzeugluftreifen in Radialbauart mit einem Laufstreifen, Seitenwänden (1), Wulstbereichen (2) und mit zumindest einer Gewebelage, insbesondere mit zwei Gewebelagen, in der Radialkarkasse, die in jedem Seitenwandbereich einen Überlappungsbereich aufweist, wobei auf jeder Seitenwand (1) zumindest ein Schraffurfeld (4c, 10) ausgebildet ist, welches mit zumindest im Wesentlichen parallel zueinander verlaufenden Erhebungen (3) ausgebildet ist, wobei die Erhebungen (3) gegenüber den glatten Bereichen der Seitenwand (1) eine Höhe (h₁) von 0,2 mm bis 0,6 mm aufweisen, wobei das Schraffurfeld (4c, 10) zumindest zum Teil von einem erhöhten Rahmen (5, 11) begrenzt ist, welcher eine glatte Oberfläche und über seine Breite und Längserstreckung eine konstante Höhe (h₂) aufweist, die zumindest der Höhe (h₁) der Erhebungen (3) entspricht,
**dadurch gekennzeichnet,**
**dass** zumindest ein Schraffurfeld (4c, 10) auf jeder Seitenwand (1) nahe des Wulstbereiches (2) und beim Überlappungsbereich der Gewebelage(n) ausgebildet ist, welches zwei im Wesentlichen in radialer Richtung verlaufende Seitenränder und einen beim Wulstbereich (2) verlaufenden Rand, eine radiale Erstreckung von mindestens 3 cm sowie in Umfangsrichtung der Seitenwand (1) eine Erstreckung von mindestens 3 cm und insbesondere von bis zu 7 cm aufweist, wobei zumindest ein Seitenrand und der beim Wulstbereich (2) verlaufende Rand vom Rahmen (5, 11) bzw. von Rahmenteilen begrenzt sind, welche zumindest bereichsweise eine Breite von mindestens 4 mm aufweisen, wobei der Rahmen (5, 11) von einer Vertiefung (8) in der Vulkanisationsform ausgebildet wird, in welcher Entlüftungsbohrungen (9) mit Entlüftungseinsätzen (9a) positioniert sind.

2. Fahrzeugluftreifen nach Anspruch 1, **dadurch gekennzeichnet, dass** das die Höhe (h₂) des Rahmens (5, 11) um mindestens 0,2 mm größer ist als die Höhe (h₁) der Erhebungen (3).

3. Fahrzeugluftreifen Anspruch 1 oder 2, **dadurch gekennzeichnet, dass** das Schraffurfeld (10) mehrere Schraffurfeldelemente (10a, 10b) aufweist, wobei die Erhebungen (3) in jedem Schraffurfeldelement abweichend zu den Erhebungen (3) in den anderen Schraffurfeldelementen verlaufen.

4. Fahrzeugluftreifen nach einem der Ansprüche 1 bis 3, **dadurch gekennzeichnet, dass** die Breite des Rahmens (5, 11) zumindest bereichsweise bis zu 6 mm beträgt.

5. Fahrzeugluftreifen nach einem der Ansprüche 1 bis 4, **dadurch gekennzeichnet, dass** der Rahmen (5, 11) eine konstante Breite aufweist.

6. Vulkanisationsform zur Vulkanisation eines Fahrzeugluftreifens mit Seitenschalen (6) zur Ausformung der Seitenwände (1) des Fahrzeugluftreifens, wobei in jenem Bereich jeder Seitenschale (6), der an den Wulstbereich (2) anschließt und in welchem der Reifen mit dem Überlappungsbereich der Karkasslage(n) positioniert wird, zumindest ein Flächenelement mit zumindest im Wesentlichen parallel zueinander verlaufenden Vertiefungen (8) mit einer Tiefe von 0,2 mm bis 0,6 mm ausgebildet ist, welches Flächenelement zwei im Wesentlichen in radialer Richtung verlaufende Seitenränder und einen beim Wulstbereich (2) verlaufenden Rand, eine radiale Erstreckung von mindestens 3 cm sowie in Umfangsrichtung der Seitenschale (6) eine Erstreckung von mindestens 3 cm und insbesondere von bis zu 7 cm aufweist und zumindest zum Teil von einer Vertiefung (7) begrenzt ist, die zumindest einen Seitenrand und den beim Wulstbereich (2) verlaufende Rand begrenzt ist, bereichsweise mindestens 4 mm breit ist und deren Tiefe zumindest der Tiefe der Vertiefungen (8) im Flächenelement entspricht, wobei in dieser Vertiefung (7) Entlüftungsbohrungen (9) mit Entlüftungseinsätzen (9a) vorgesehen sind.

7. Vulkanisationsform nach Anspruch 6, **dadurch gekennzeichnet, dass** die Entlüftungsbohrungen (9) in jenen Bereichen der Vertiefung (7) ausgebildet sind, die eine Breite von mindestens 4 mm aufweisen.

8. Vulkanisationsform nach Anspruch 6 oder 7, **dadurch gekennzeichnet, dass** die Tiefe der das Flächenelement zumindest zum Teil umlaufenden Vertiefung (7) um mindestens 0,2 mm tiefer ist als die Tiefe der Vertiefungen (8) im Flächenelement.

9. Vulkanisationsform nach einem der Ansprüche 6 bis 8, **dadurch gekennzeichnet, dass** zumindest ein Teil der Vertiefungen (8) im Flächenelement in die das Flächenelement begrenzende Vertiefung (7) einmündet.

## Claims

1. Pneumatic vehicle tyre of radial construction vulcanized in a vulcanization mould, having a tread, sidewalls (1), bead regions (2) and having at least one fabric ply, in particular having two fabric plies, in the radial carcass, which has an overlapping region in each sidewall region, wherein at least one hatching area (4c, 10) is formed on each sidewall (1), said hatching area (4c, 10) being formed with ridges (3) that extend at least substantially parallel to one another, wherein, compared with the smooth regions of the sidewall (1), the ridges (3) have a height (h₁) of 0.2 mm to 0.6 mm, wherein the hatching area (4c, 10) is bounded at least in part by a raised frame (5, 11) that has a smooth surface and a constant height (h₂) over its width and longitudinal extent, corresponding at least to the height (h₁) of the ridges (3),
**characterized**
**in that** at least one hatching area (4c, 10) is formed on each sidewall (1) close to the bead region (2) and in the overlapping region of the fabric ply/plies, said hatching area (4c, 10) having two side edges extending substantially in a radial direction and an edge extending in the bead region (2), a radial extent of at least 3 cm and, in the circumferential direction of the sidewall (1), an extent of at least 3 cm and in particular up to 7 cm, wherein at least one side edge and the edge extending in the bead region (2) are bounded by the frame (5, 11) or by frame parts that at least regionally have a width of at least 4 mm, wherein the frame (5, 11) is formed by a recess (8) in the vulcanization mould, in which ventilation bores (9) having ventilation inserts (9a) are positioned.

2. Pneumatic vehicle tyre according to Claim 1, **characterized in that** the height (h₂) of the frame (5, 11) is at least 0.2 mm greater than the height (h₁) of the ridges (3).

3. Pneumatic vehicle tyre according to Claim 1 or 2, **characterized in that** the hatching area (10) has a plurality of hatching-area elements (10a, 10b), wherein the ridges (3) extend differently in each hatching-area element from the ridges (3) in the other hatching-area elements.

4. Pneumatic vehicle tyre according to one of Claims 1 to 3, **characterized in that** the width of the frame (5, 11) is at least regionally up to 6 mm.

5. Pneumatic vehicle tyre according to one of Claims 1 to 4, **characterized in that** the frame (5, 11) has a constant width.

6. Vulcanization mould for vulcanizing a pneumatic vehicle tyre, having side shells (6) for moulding the sidewalls (1) of the pneumatic vehicle tyre, wherein, in that region of each side shell (6) which adjoins the bead region (2) and in which the tyre is positioned with the overlapping region of the carcass ply/plies, at least one surface element having recesses (8), extending at least substantially parallel to one another, with a depth of 0.2 mm to 0.6 mm is formed, said surface element having two side edges extending substantially in a radial direction and an edge extending in the bead region (2), a radial extent of at least 3 cm and, in the circumferential direction of the side shell (6), an extent of at least 3 cm and in particular up to 7 cm, and being bounded at least in part by a recess (7) which is bounds at least one side edge and the edge extending in the bead region (2), is regionally at least 4 mm wide and the depth of which corresponds at least to the depth of the recesses (8) in the surface element, wherein ventilation bores (9) having ventilation inserts (9a) are provided in this recess (7).

7. Vulcanization mould according to Claim 6, **characterized in that** the ventilation bores (9) are formed in those regions of the recess (7) that have a width of at least 4 mm.

8. Vulcanization mould according to Claim 6 or 7, **characterized in that** the depth of the recess (7) at least partially encircling the surface element is at least 0.2 mm deeper than the depth of the recesses (8) in the surface element.

9. Vulcanization mould according to one of Claims 6 to 8, **characterized in that** at least some of the recesses (8) in the surface element open into the recess (7) bounding the surface element.

## Revendications

1. Pneumatique de véhicule vulcanisé dans un moule de vulcanisation, de construction radiale, comprenant une bande de roulement, des parois latérales (1), des régions de talon (2) et au moins une couche de tissu, en particulier deux couches de tissu, dans la carcasse radiale, qui présente une région de chevauchement dans chaque région de paroi latérale, au moins un champ de hachures (4c, 10) étant réalisé sur chaque paroi latérale (1), lequel est réalisé avec des rehaussements (3) s'étendant au moins essentiellement parallèlement les uns aux autres, les rehaussements (3) présentant, par rapport aux régions lisses de la paroi latérale (1), une hauteur (h₁) de 0,2 mm à 0,6 mm, le champ de hachures (4c, 10) étant limité au moins en partie par un cadre rehaussé (5, 11) qui présente une surface lisse et une hauteur constante (h₂) sur sa largeur et son étendue longitudinale, laquelle hauteur correspond au moins à la hauteur (h₁) des rehaussements (3),
**caractérisé en ce**
**qu'**au moins un champ de hachures (4c, 10) est réalisé sur chaque paroi latérale (1) à proximité de la région de talon (2) et au niveau de la région de chevauchement de la ou des couches de tissu, lequel présente deux bords latéraux s'étendant essentiellement dans la direction radiale et un bord s'étendant au niveau de la région de talon (2), une étendue radiale d'au moins 3 cm et, dans la direction périphérique de la paroi latérale (1), une étendue d'au moins 3 cm et notamment pouvant aller jusqu'à 7 cm, au moins un bord latéral et le bord s'étendant au niveau de la région de talon (2) étant limités par le cadre (5, 11) ou par des parties de cadre qui présentent au moins en partie une largeur d'au moins 4 mm, le cadre (5, 11) étant réalisé par un renfoncement (8) dans le moule de vulcanisation, dans lequel sont positionnés des trous de désaérage (9) avec des inserts de désaérage (9a).

2. Pneumatique de véhicule selon la revendication 1, **caractérisé en ce que** la hauteur (h₂) du cadre (5, 11) est supérieure d'au moins 0,2 mm à la hauteur (h₁) des rehaussements (3).

3. Pneumatique de véhicule selon la revendication 1 ou 2, **caractérisé en ce que** le champ de hachures (10) présente plusieurs éléments de champ de hachures (10a, 10b), les rehaussements (3) s'étendant dans chaque élément de champ de hachures de manière différente par rapport aux rehaussements (3) dans les autres éléments de champ de hachures.

4. Pneumatique de véhicule selon l'une quelconque des revendications 1 à 3, **caractérisé en ce que** la largeur du cadre (5, 11) mesure au moins en partie jusqu'à 6 mm.

5. Pneumatique de véhicule selon l'une quelconque des revendications 1 à 4, **caractérisé en ce que** le cadre (5, 11) présente une largeur constante.

6. Moule de vulcanisation pour la vulcanisation d'un pneumatique de véhicule, comprenant des coques latérales (6) pour la formation des parois latérales (1) du pneumatique de véhicule, dans lequel, dans la région de chaque coque latérale (6) qui se raccorde à la région de talon (2) et dans laquelle le pneu est positionné avec la région de chevauchement de la ou des couches de carcasse, au moins un élément de surface est réalisé avec des renfoncements (8) s'étendant au moins essentiellement parallèlement les uns aux autres et réalisés avec une profondeur de 0,2 mm à 0,6 mm, lequel élément de surface présente deux bords latéraux s'étendant essentiellement dans la direction radiale et un bord s'étendant au niveau de la région de talon (2), une étendue radiale d'au moins 3 cm et, dans la direction périphérique de la coque latérale (6), une étendue d'au moins 3 cm et notamment pouvant aller jusqu'à 7 cm, et étant limité au moins en partie par un renfoncement (7), qui est limite au moins un bord latéral et le bord s'étendant au niveau de la région de talon (2), qui présente en partie une largeur d'au moins 4 mm et dont la profondeur correspond au moins à la profondeur des renfoncements (8) dans l'élément de surface, des trous de désaérage (9) avec des inserts de désaérage (9a) étant prévus dans ce renfoncement (7) .

7. Moule de vulcanisation selon la revendication 6, **caractérisé en ce que** les trous de désaérage (9) sont réalisés dans les régions du renfoncement (7) qui présentent une largeur d'au moins 4 mm.

8. Moule de vulcanisation selon la revendication 6 ou 7, **caractérisé en ce que** la profondeur du renfoncement (7) entourant au moins en partie l'élément de surface est supérieure d'au moins 0,2 mm par rapport à la profondeur des renfoncements (8) dans l'élément de surface.

9. Moule de vulcanisation selon l'une quelconque des revendications 6 à 8, **caractérisé en ce qu'**au moins une partie des renfoncements (8) dans l'élément de surface débouchent dans le renfoncement (7) limitant l'élément de surface.
